# EUROPÄISCHE PATENTSCHRIFT

(11) **EP 4 409 216 B1**
(45) Veröffentlichungstag und Bekanntmachung des Hinweises auf die Patenterteilung: **18.06.2025**
(21) Anmeldenummer: 22777242.3
(22) Anmeldetag: 19.09.2022
(51) Int. Cl.: F28D 20/02

(54) **WÄRMESPEICHERSYSTEM UND VERFAHREN ZUM SPEICHERN THERMISCHER ENERGIE**
HEAT STORAGE SYSTEM AND METHOD FOR STORING THERMAL ENERGY
SYSTÈME DE STOCKAGE DE CHALEUR ET PROCÉDÉ DE STOCKAGE D'ÉNERGIE THERMIQUE

(30) Priorität: 30.09.2021 DE 102021210947
(43) Veröffentlichungstag der Anmeldung: 07.08.2024
(73) Patentinhaber: Deutsches Zentrum für Luft- und Raumfahrt e.V., 53227 Bonn (DE)
(72) Erfinder: TOMBRINK, Jonas, 70199 Stuttgart (DE); BAUER, Dan, 71409 Schwaikheim (DE)
(74) Vertreter: DTS Patent- und Rechtsanwälte PartmbB
(86) Internationale Anmeldenummer: PCT/EP2022/075990
(87) Internationale Veröffentlichungsnummer: WO 2023/052176

(56) Entgegenhaltungen:
- DE-A1- 102014 103 108
- DE-A1- 102019 210 703
- DE-U1- 20 302 591
- US-A- 4 286 141

## Beschreibung

Die vorliegende Erfindung betrifft ein Wärmespeichersystem zum Speichern thermischer Energie. Zudem betrifft die vorliegende Erfindung ein Verfahren zum Speichern thermischer Energie durch ein Wärmespeichersystem.

Es sind Wärmespeicher zum Speichern thermischer Energie bekannt, bei welchen ein Speichermaterial, z.B. Wasser oder Beton, zum thermischen Beladen eine Temperaturerhöhung durch Wärmezufuhr erfährt. Zum thermischen Entladen wird die gespeicherte Wärme wieder abgegeben, wodurch das Speichermaterial eine Temperatursenkung erfährt. Solche sensiblen Wärmespeicher weisen eine begrenzte Energiespeicherdichte auf.

Gattungsgemäße Wärmespeicher sind z.B. aus der DE 10 2019 210 703 A1, der DE 10 2014 103 108 A1, der US 4 286 141 A und der DE 203 02 591 U1 bekannt. Das Dokument DE 10 2019 210 703 A1 offenbart ein Wärmespeichersystem nach dem Oberbegriff des Anspruchs 1.

Der vorliegenden Erfindung liegt die Aufgabe zugrunde, ein Wärmespeichersystem bereitzustellen, das eine erhöhte Energiespeicherdichte aufweist und flexibel einsetzbar ist.

Diese Aufgabe wird erfindungsgemäß durch ein Wärmespeichersystem, aufweisend einen Speicherbehälter zur Aufnahme von Speichermaterial in einem Innenraum des Speicherbehälters und einen Kreislauf zur Entnahme und Zufuhr des im Innenraum aufgenommenen Speichermaterials, gelöst, wobei der Kreislauf eine Wärmeübertragungseinrichtung zum thermischen Entladen und/oder thermischen Beladen des Speichermaterials umfasst, eine Entnahmeeinrichtung umfasst, die eingerichtet ist, Speichermaterial in der Flüssigphase aus dem Speicherbehälter zu entnehmen und zum thermischen Entladen und/oder thermischen Beladen der Wärmeübertragungseinrichtung zuzuführen, einen Zuführkanal/Abführkanal umfasst, der eine Fluidverbindung zwischen der Wärmeübertragungseinrichtung und dem Speicherbehälter bildet, und eine Rückführungseinrichtung umfasst, die eingerichtet ist, Speichermaterial in der Festphase dem Innenraum des Speicherbehälters rückzuführen.

Durch ein solches Wärmespeichersystem kann eine hohe Energiespeicherdichte erreicht sein, da das Speichermaterial durch die Nutzung des Phasenwechsels zwischen Festphase und Flüssigphase große Wärmemengen speichern und wieder freigeben kann.

Sowohl zum thermischen Entladen als auch zum thermischen Beladen wird das Speichermaterial in der Flüssigphase aus dem Speicherbehälter entnommen. Thermisch entladenes Speichermaterial wird in der Festphase in den Speicherbehälter rückgeführt. Auf diese Weise kann neben einer hohen Energiespeicherdichte eine einfache Betriebsweise des Wärmespeichersystems erreicht sein und dieses flexibel eingesetzt werden.

In Abhängigkeit von einem Einsatzbereich des Wärmespeichersystems kann das Speichermaterial für einen Niedertemperaturbereich oder für einen Hochtemperaturbereich ausgewählt sein.

Das Wärmespeichersystem kann als Kurzzeitwärmespeicher oder als Langzeitwärmespeicher ausgebildet sein.

In einer Weiterbildung des Wärmespeichersystems kann die Wärmeübertragungseinrichtung eingerichtet sein, um zum thermischen Entladen des Speichermaterials latente Wärme zu übertragen und um zum thermischen Beladen des Speichermaterials sensible Wärme zu übertragen.

Durch das Übertragen latenter Wärme zum thermischen Entladen des Speichermaterials kann in einem relativ kleinen Temperaturbereich eine große Wärmemenge durch den Phasenwechsel freigegeben werden.

Vorteilhaft kann ein Temperaturbereich des Wärmespeichersystems von einem Temperaturniveau wenig unterhalb der Zersetzungstemperatur und/oder Verdampfungstemperatur des Speichermaterials bis unterhalb der Schmelztemperatur vorgesehen sein.

Auf diese Weise kann ermöglicht sein, sowohl die im Speichermaterial in der Flüssigphase gespeicherte sensible Wärme oberhalb der Schmelztemperatur zu nutzen als auch die durch den Phasenwechsel freigegebene latente Wärme.

Mit dem Wärmespeichersystem kann dadurch eine besonders hohe Energiespeicherdichte erreicht werden.

Eine weitere Ausgestaltung des Verfahrens kann vorsehen, dass die Wärmeübertragungseinrichtung einen Latentwärmeübertrager umfasst oder als ein Latentwärmeübertrager ausgebildet ist und eine Austragseinrichtung aufweist, um erstarrtes Speichermaterial auszutragen und/oder der Rückführungseinrichtung zuzuführen.

Bevorzugt ist der Latentwärmeübertrager als ein aktiver oder angetriebener Latentwärmeübertrager ausgebildet.

Der Latentwärmeübertrager kann eine Austragseinrichtung aufweisen, die zum Zerkleinern und/oder Austragen des durch den Phasenwechsel erstarrten Speichermaterials ausgebildet ist.

Die Austragseinrichtung kann beispielsweise als eine Abschabeeinrichtung ausgebildet sein, welche am Latentwärmeübertrager erstarrtes Speichermaterial abschabt und/oder zerkleinert.

Bevorzugt wird das Speichermaterial in fester Form, insbesondere granulatförmig oder stückig, aus der Wärmeübertragungseinrichtung ausgetragen.

In einer vorteilhaften Ausgestaltung des Verfahrens kann die Wärmeübertragungseinrichtung einen rotierenden Trommelwärmeübertrager umfassen oder als ein rotierender Trommelwärmeübertrager ausgebildet sein.

Ein solcher Trommelwärmeübertrager ermöglicht die Übertragung latenter Wärme. Durch eine Rotationsbewegung des Trommelwärmeübertragers kann das durch die Übertragung latenter Wärme erstarrte Speichermaterial in dem rotierenden Trommelwärmeübertrager in eine Granulatform oder Stückform gebrochen werden.

Eine Ausgestaltung des Wärmespeichersystems kann vorsehen, dass die Rückführungseinrichtung wenigstens eine Fördereinheit und/oder eine Schwerkraftzuführung aufweist und in den Innenraum des Speicherbehälters mündet.

Durch die Rückführungseinrichtung kann erstarrtes Speichermaterial von der Wärmeübertragungseinrichtung zurück in den Innenraum des Speicherbehälters rückgeführt werden.

Vorzugsweise kann das erstarrte Speichermaterial durch die Fördereinheit durch eine Förderbewegung in den Innenraum des Speicherbehälters rückgeführt werden.

Durch die Schwerkraftzuführung kann eine Rückführung des erstarrten Speichermaterials unter Schwerkrafteinfluss ausgebildet sein.

Vorteilhafterweise kann die Rückführung des erstarrten Speichermaterials durch die Schwerkraftzuführung von oben oder seitlich in den Speicherbehälter erfolgen.

Bevorzugt kann die Schwerkraftzuführung als ein Fallrohr oder ein abgetrennter Rückführungsbereich ausgebildet sein.

In einer Ausführungsform können die Fördereinheit und die Schwerkraftzuführung miteinander kombiniert sein und einen zusammenhängenden Förderweg zur Rückführung des erstarrten Speichermaterials in den Innenraum des Speicherbehälters bilden.

Bevorzugt kann bei dem Wärmespeichersystem vorgesehen sein, dass die wenigstens eine Fördereinheit einen Stetigförderer, eine Schleuse und/oder dergleichen aufweist.

Bevorzugt kann der Stetigförderer als eine Förderschnecke, ein Förderband, eine Zellenradschleuse oder dergleichen ausgebildet sein.

Durch die Fördereinheit kann eine kontinuierliche und/oder diskontinuierliche Zuführung des erstarrten Speichermaterials in den Innenraum des Speicherbehälters vorgesehen sein.

In einer Weiterbildung des Wärmespeichersystems kann im Innenraum des Speicherbehälters eine Verteilungseinrichtung vorgesehen sein, um im Innenraum des Speicherbehälters in einem unteren Bereich eine gleichmäßige Verteilung von Speichermaterial in der Festphase auszubilden.

Die Verteilungseinrichtung kann als eine aktive, z.B. angetriebene, Verteilungseinrichtung oder als eine passive Verteilungseinrichtung ausgebildet sein.

Vorzugsweise kann die Verteilungseinrichtung als eine Schiebereinrichtung, eine Fördereinrichtung, eine Leiteinrichtung, beispielsweise in Form von im Innenraum des Speicherbehälters angeordnete Leitblechen, oder dergleichen ausgebildet sein.

In einer besonders bevorzugten Ausgestaltung des Wärmespeichersystems kann im Innenraum des Speicherbehälters wenigstens ein Sammelbereich zum Sammeln von Speichermaterial in der Flüssigphase vorgesehen sein, wobei der Sammelbereich durch eine flüssigkeitsdurchlässige und feststoffundurchlässige Trenneinrichtung zum übrigen Innenraum des Speicherbehälters abgegrenzt ist und der Sammelbereich mit der Entnahmeeinrichtung fluidgekoppelt ist.

Die Trenneinrichtung ist bevorzugt als ein Lochblech oder ein Sieb ausgebildet.

Durch eine solche Trenneinrichtung ist das Speichermaterial in der Festphase im Innenraum des Speicherbehälters an einem Eintreten in den Sammelbereich gehindert. Dagegen kann Speichermaterial in der Flüssigphase durch die Trenneinrichtung hindurchströmen und sich im Sammelbereich sammeln.

Aufgrund des Dichteunterschieds zwischen Speichermaterial in der Flüssigphase und Speichermaterial in der Festphase bildet sich in einem unteren Bereich im Innenraum des Speicherbehälters ein Bett aus Speichermaterial in der Festphase aus. Aufgrund der geringeren Dichte des Speichermaterials in der Flüssigphase sammelt sich das Speichermaterial in der Flüssigphase in einem oberen Bereich im Innenraum des Speicherbehälters.

Da das Speichermaterial in der Festphase granulatförmig oder stückig in den Innenraum des Speicherbehälters rückgeführt wird, bildet das Bett aus Speichermaterial in der Festphase im unteren Bereich im Innenraum des Speicherbehälters eine poröse Struktur aus.

Bevorzugt kann vorgesehen sein, dass der Sammelbereich einen untersten Bereich im Innenraum des Speichers bildet. Das darüber liegende Bett aus Speichermaterial in der Festphase kann den unteren Bereich im Innenraum des Speichers bilden. Das Speichermaterial in der Flüssigphase kann einen oberen Bereich im Innenraum des Speichers bilden.

Beim Entnehmen von Speichermaterial in der Flüssigphase durch die Entnahmeeinrichtung durchströmt das flüssige Speichermaterial das darunter liegende poröse Bett aus Speichermaterial in der Festphase. Aufgrund des Durchströmens des flüssigen Speichermaterials kann das Speichermaterial in der Festphase durch Wärmeübertragung zumindest teilweise aufgeschmolzen werden.

Nach dem Durchströmen des porösen Betts aus Speichermaterial in der Festphase kann sich das Speichermaterial in der Flüssigphase bevorzugt im Sammelbereich sammeln.

Durch eine geeignete Dimensionierung eines Lochdurchmessers der in der Trenneinrichtung vorgesehenen Löcher, kann die Größe von Partikeln des Speichermaterials in der Festphase, die durch die Trenneinrichtung hindurchtreten können, beeinflusst werden.

Vorteilhaft kann es sein, dass die Löcher in der Trenneinrichtung einen Lochdurchmesser von ungefähr 50 mm oder weniger, vorzugsweise ungefähr 20 mm oder weniger, besonders bevorzugt ungefähr 5 mm oder weniger aufweisen.

Unter dem Begriff "ungefähr" ist insbesondere eine Abweichung von höchstens 20 %, beispielsweise höchstens 10 %, des jeweils angegebenen Werts zu verstehen.

Eine vorteilhafte Weiterbildung des Wärmespeichersystems kann vorsehen, dass der wenigstens eine Sammelbereich in einem Bodenbereich des Speicherbehälters angeordnet ist und/oder sich zumindest bereichsweise entlang eines Umfangsbereichs des Speicherbehälters erstreckt.

Bevorzugt kann der Sammelbereich mit der Trenneinrichtung einen Boden im Innenraum des Speicherbehälters bilden.

Vorzugsweise kann der Sammelbereich einen untersten abgegrenzten Bereich im Innenraum des Speicherbehälters bilden.

Es kann vorgesehen sein, dass der im Bodenbereich des Speicherbehälters gebildete Sammelbereich und der sich zumindest bereichsweise entlang eines Umfangsbereichs des Speicherbehälters erstreckende Sammelbereich fluidgekoppelt sind.

Eine weitere vorteilhafte Ausgestaltung des Wärmespeichersystems kann vorsehen, dass der wenigstens eine Sammelbereich einen Sammelkanal umfasst, der sich im Innenraum des Speicherbehälters erstreckt.

Bevorzugt erstreckt sich der wenigstens eine Sammelkanal in einer im Wesentlichen vertikalen Richtung im Innenraum des Speicherbehälters.

Der wenigstens eine Sammelkanal kann beispielsweise durch ein rohrförmiges Element gebildet sein, das sich in Innenraum des Speicherbehälter erstreckt.

Bevorzug bildet eine Wandung des Sammelkanals die Trenneinrichtung.

Der Sammelkanal kann in einem unteren Bereich des Innenraums des Speicherbehälters mit der Entnahmeeinrichtung fluidgekoppelt sein.

Ebenso kann der Sammelkanal in den zuvor beschriebenen Sammelbereich, der im Bodenbereich oder im Umfangsbereich des Speicherbehälters gebildet ist, münden.

In einer bevorzugten Weiterbildung des Wärmespeichersystems kann der Sammelkanal eine Niveauregulierungseinrichtung aufweisen, die einen durch den Sammelkanal gebildeten Strömungsweg zu der Entnahmeeinrichtung in Abhängigkeit von einer Schichtungstemperatur des Speichermaterials blockiert.

Vorzugsweise weist die Niveauregulierungseinrichtung ein Höhenverstellelement auf, das entlang einer Höhenverstellrichtung in dem Sammelkanal höhenverstellbar geführt ist.

Das Höhenverstellelement kann einen Strömungsweg zwischen dem Sammelbereich und dem oberen Bereich des Innenraums des Speicherbehälters, in dem Speichermaterial in der Flüssigphase auf einem relativ höheren Temperaturniveau vorhanden ist, in Abhängigkeit von einer Schichtungstemperatur des Speichermaterials blockieren.

Eine Höhenposition des Höhenverstellelements kann insbesondere in Abhängigkeit von der Schichtungstemperatur des Speichermaterials geregelt sein.

Besonders bevorzugt wird die Höhenposition des Höhenverstellelements in der Weise geregelt, dass das Höhenverstellelement im Wesentlichen kontinuierlich auf dem Niveau der Grenze zwischen Festphase und Flüssigphase des Speichermaterials angeordnet ist.

Auf diese Weise kann bei der Entnahme von flüssigem Speichermaterial zum thermischen Beladen verhindert werden, dass flüssiges Speichermaterial auf einem hohen Temperaturniveau aus dem oberen Bereich des Innenraums des Speicherbehälters durch die Entnahmeeinrichtung entnommen wird.

Bei der Entnahme von Speichermaterial in der Flüssigphase kann dadurch erreicht sein, dass flüssiges Speichermaterial auf einem relativ niedrigeren Temperaturniveau im Bereich der Grenze zwischen Festphase und Flüssigphase zuerst zumindest bereichsweise durch das poröse Bett von Speichermaterial in der Festphase strömt und sich dann im wenigstens einen Sammelkanal sammelt.

Durch das zumindest bereichsweise Durchströmen des porösen Betts aus Speichermaterial in der Festphase mit flüssigem Speichermaterial, wird das feste Speichermaterial zumindest teilweise aufgeschmolzen.

Eine Ausgestaltung des Wärmespeichersystems kann zudem vorsehen, dass die Trenneinrichtung und/oder der Sammelbereich zumindest bereichsweise beheizt ist.

Bevorzug können die Trenneinrichtung und/oder der Sammelbereich durch eine elektrische Heizung beheizt sein.

Durch das Beheizen der Trenneinrichtung und/oder des Sammelbereichs kann verhindert sein, dass der Sammelbereich aufgrund von Speichermaterial in der Festphase verstopft.

In einer weiteren Ausgestaltung des Wärmespeichersystems kann ein Wärmeübertrager in einem unteren Bereich im Innenraum des Speicherbehälters vorgesehen sein.

Durch einen solchen Wärmeübertrager kann Wärme in den Speicherbehälter eingebracht werden, um Speichermaterial in der Festphase im unteren Bereich des Innenraums aufzuschmelzen.

Aufgrund der isothermen Phasenwechseltemperatur des Speichermaterials kann das Erwärmen des Speichermaterials in der Festphase durch den Wärmeübertrager auf dem niedrigsten Temperaturniveau im Speicherbehälter erfolgen.

Ferner liegt der vorliegenden Erfindung die Aufgabe zugrunde, ein Verfahren zum Speichern thermischer Energie bereitzustellen, mittels welchem thermische Energie mit einer hohen Energiespeicherdichte gespeichert werden kann und welches flexibel einsetzbar ist.

Diese Aufgabe wird erfindungsgemäß durch ein Verfahren zum Speichern thermischer Energie durch ein Wärmespeichersystem, insbesondere ein Wärmespeichersystem gemäß einer der zuvor beschriebenen Ausführungsformen, gelöst, wobei zum thermischen Entladen Speichermaterial in der Flüssigphase einem Speicherbehälter entnommen wird und über einen Zuführkanal/Abführkanal einer Wärmeübertragungseinrichtung zugeführt wird, das Speichermaterial in der Wärmeübertragungseinrichtung durch Übertragung latenter Wärme thermisch entladen wird, das erstarrte Speichermaterial nach dem thermischen Entladen einer Rückführungseinrichtung zugeführt wird, und das Speichermaterial in der Festphase durch die Rückführungseinrichtung in den Innenraum des Speicherbehälters rückgeführt wird.

Durch dieses Verfahren kann es ermöglicht sein, eine hohe Energiespeicherdichte beim Speichern thermischer Energie zu erreichen, da das Speichermaterial durch die Ausnutzung des Phasenwechsels von der Flüssigphase zur Festphase beim thermischen Entladen, also der Übertragung latenter Wärme, eine große Wärmemenge freigeben kann.

Indem das Speichermaterial dem Speicherbehälter in der Flüssigphase entnommen wird, kann zudem die im Speichermaterial in der Flüssigphase gespeicherte sensible Wärme oberhalb der Schmelztemperatur genutzt werden. Auf diese Weise kann durch dieses Verfahren die Energiespeicherdichte weiter gesteigert werden.

Das Verfahren kann zum Speichern thermischer Energie im Niedertemperaturbereich oder im Hochtemperaturbereich ausgebildet sein.

Eine bevorzugte Weiterbildung des Verfahrens kann vorsehen, dass zum thermischen Beladen des Wärmespeichersystems Speichermaterial in der Flüssigphase aus dem Speicherbehälter entnommen wird und der Wärmeübertragungseinrichtung zugeführt wird, das Speichermaterial durch Wärmezufuhr in der Wärmeübertragungseinrichtung erwärmt wird und das erwärmte Speichermaterial in den Speicherbehälter rückgeführt wird.

Das thermische Beladen des Speichermaterials in der Wärmeübertragungseinrichtung kann beispielsweise durch einen Wärmeübertrager oder eine Heizeinrichtung, beispielsweise eine Elektroheizung, vorgesehen sein.

Weitere bevorzugte Merkmale und/oder Vorteile der Erfindung sind Gegenstand der nachfolgenden Beschreibung und der zeichnerischen Darstellung von Ausführungsbeispielen.

In den Figuren zeigen:
- Fig. 1: eine schematische Darstellung einer ersten Ausführungsform eines Wärmespeichersystems während eines thermischen Beladevorgangs;
- Fig. 2: eine schematische Darstellung des Wärmespeichersystems in Fig. 1 während eines thermischen Entladevorgangs;
- Fig. 3: eine schematische Darstellung einer alternativen Ausführungsform des Wärmespeichersystems während eines thermischen Beladevorgangs;
- Fig. 4: eine schematische Darstellung des Wärmespeichersystems in Fig. 3 während eines thermischen Entladevorgangs.

Gleiche oder funktional äquivalente Elemente sind in sämtlichen Figuren mit denselben Bezugszeichen versehen.

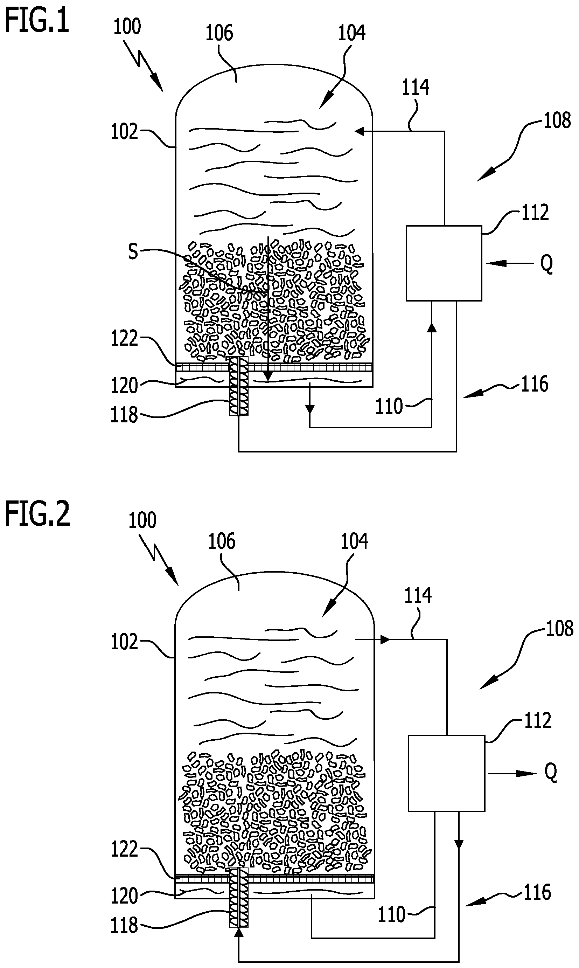

Die Fig. 1 und Fig. 2 zeigen schematisch eine erste Ausführungsform eines als Ganzes mit 100 bezeichneten Wärmespeichersystems.

Dabei zeigt Fig. 1 das Wärmespeichersystem während eines thermischen Beladevorgangs und Fig. 2 das Wärmespeichersystem während eines thermischen Entladevorgangs.

Ein solches Wärmespeichersystem 100 ist vorzugsweise für den Einsatz in Kraftwerksprozessen, insbesondere solarthermischen Kraftwerken, konventionellen Kraftwerken, Speicherkraftwerken und OCR-Kraftwerken, oder in Industrieprozessen, beispielsweise zum Speichern von Abwärme oder Bereitstellung von Prozessdampf, vorgesehen.

Das Wärmespeichersystem 100 umfasst einen Speicherbehälter 102, der zur Aufnahme eines Speichermaterials 104 ausgebildet ist. Das Speichermaterial 104 ist zum Beladen, Speichern und Entladen thermischer Energie vorgesehen.

Der Speicherbehälter 102 bildet einen Innenraum 106, in dem das Speichermaterial 104 aufgenommen ist.

Das Speichermaterial 104 ist ein Phasenwechselmaterial (PCM). Das Speichermaterial 104 kann ein beliebiges Phasenwechselmaterial sein, das in Abhängigkeit von einem Temperaturniveau eines Einsatzbereichs des Wärmespeichersystems 100, beispielsweise ein Temperaturniveau eines Abwärmestroms oder dergleichen, ausgewählt ist.

Das Speichermaterial 104 kann sowohl für ein Niedertemperaturbereich als auch für einen Hochtemperaturbereich ausgewählt sein. Bei dem Speichermaterial 104 kann es sich beispielsweise um Wasser, Paraffine, Salzhydrate oder Metalle handeln. Ferner kann als Speichermaterial 104 ein Nitratsalz oder eine eutektische Mischung von Nitratsalzen und/oder anderen Salzen vorgesehen sein.

In Abhängigkeit von einem thermischen Beladungszustand liegt das Speichermaterial 104 im Innenraum 106 des Speicherbehälters 102 sowohl in der Flüssigphase als auch in der Festphase vor.

Das Verhältnis zwischen Speichermaterial 104 in der Flüssigphase und Speichermaterial 104 in der Festphase im Speicherbehälter 102 ist abhängig vom thermischen Beladungszustand des Speichermaterials 104.

Je höher der thermische Beladungszustand des Speichermaterials 104 ist, umso höher ist der Anteil von Speichermaterial 104 in der Flüssigphase im Speicherbehälter 102. Je niedriger der thermische Beladungszustand des Speichermaterials 104 ist, umso niedriger ist der Anteil von Speichermaterial 104 in der Festphase im Speicherbehälter 102.

Abhängig von der Wahl des Speichermaterials 104 kann sich aufgrund des Dichteunterschieds zwischen Speichermaterial 104 in der Flüssigphase und Speichermaterial 104 in der Festphase beispielsweise in einem oberen Bereich im Innenraum 106 des Speicherbehälters 102 Speichermaterial 104 in der Flüssigphase sammeln, während sich in einem unteren Bereich im Innenraum 106 des Speicherbehälters 102 ein Bett aus Speichermaterial 104 in der Festphase bildet. Bei der Wahl von Wasser oder manchen wässrigen Medien als Speichermaterial 104 kann dies auch umgekehrt erfolgen.

Wie nachfolgend noch näher erläutert wird, weist das aus dem Speichermaterial 104 in der Festphase gebildete Bett eine poröse Struktur auf. Dadurch kann das Speichermaterial 104 in der Festphase von dem Speichermaterial 104 in der Flüssigphase durchströmt werden.

Zur Entnahme und Zufuhr des im Innenraum 106 aufgenommenen Speichermaterials 104 umfasst das Wärmespeichersystem 100 einen Kreislauf 108.

Der Kreislauf 108 weist eine Entnahmeeinrichtung 110 auf. Die Entnahmeeinrichtung 110 bildet eine Fluidverbindung zwischen dem Speicherbehälter 102 und einer Wärmeübertragungseinrichtung 112.

Bevorzugt ist die Entnahmeeinrichtung 110 durch ein Leitungssystem gebildet.

Die Entnahmeeinrichtung 110 mündet in den Innenraum 106 des Speicherbehälters 102, insbesondere in einen unteren Bereich oder Bodenbereich des Speicherbehälters 102.

Durch die Entnahmeeinrichtung 110 wird das Speichermaterial 104 in der Flüssigphase aus dem Speicherbehälter 102 entnommen und zum thermischen Entladen der Wärmeübertragungseinrichtung 112 zugeführt.

Zudem umfasst der Kreislauf 108 einen Zuführkanal/Abführkanal 114, der eine Fluidverbindung zwischen der Wärmeübertragungseinrichtung 112 und dem Speicherbehälter 102 bildet.

Der Zuführkanal/Abführkanal 114 ist über eine Zuführ-/Abführöffnung mit dem Innenraum 106 des Speicherbehälters 102 gekoppelt. Die Zuführ-/Abführöffnung 112 bildet einen Zugang/Abgang zu dem Innenraum 106 des Speicherbehälters 102.

Durch den Zuführkanal/Abführkanal 114 wird Speichermaterial 104 in der Flüssigphase dem Speicherbehälter 102 zugeführt und entnommen.

Insbesondere mündet der Zuführkanal/Abführkanal 114 über die Zuführ-/Abführöffnung in einen oberen Bereich des Speicherbehälters 102.

Vorzugsweise mündet der Zuführkanal/Abführkanal 114 in einer relativ höheren Position in den Innenraum 106 des Speicherbehälters 102 als die Entnahmeeinrichtung 110.

Zum thermischen Entladen und Beladen des Speichermaterials 104 umfasst der Kreislauf 108 die Wärmeübertragungseinrichtung 112.

Durch Zufuhr oder Abfuhr von Wärme Q wird das der Wärmeübertragungseinrichtung 112 zugeführte Speichermaterial 104 thermisch beladen oder thermisch entladen. Beim thermischen Beladen erfährt das Speichermaterial 104 eine Temperaturerhöhung beim thermischen Entladen erfährt das Speichermaterial 104 eine Temperatursenkung.

Zum thermischen Beladen des Speichermaterials 104 ist die Wärmeübertragungseinrichtung 112 eingerichtet sensible Wärme zu übertragen.

Zum thermischen Beladen wird Speichermaterial 104 in der Flüssigphase durch die Entnahmeeinrichtung 110 auf einem niedrigen Temperaturniveau aus dem Speicherbehälter 102 entnommen und der Wärmeübertragungseinrichtung 112 zugeführt. Unter Zufuhr von Wärme Q wird das Speichermaterial 104 in der Wärmeübertragungseinrichtung 112 auf ein höheres Temperaturniveau erwärmt.

Beim thermischen Beladen erfährt das Speichermaterial 104 keinen Phasenwechsel, d.h. dieses verbleibt in der Flüssigphase. Nach dem Erwärmen des Speichermaterials 104 in der Wärmeübertragungseinrichtung 112 wird das erwärmte Speichermaterial 104 über den Zuführkanal/Abführkanal 114 dem Speicherbehälter 102 zugeführt.

Insbesondere im oberen Bereich des Speicherbehälters 102 bildet sich durch das Zuführen des erwärmten Speichermaterials 104 in der Flüssigphase eine Temperaturschichtung aus. Das Wärmespeichersystem 100 kann deshalb auch als Thermokline-Speicher bezeichnet werden.

Zum thermischen Entladen des Speichermaterials 104 ist die Wärmeübertragungseinrichtung 112 eingerichtet latente Wärme zu übertragen. Fig. 2 zeigt das Wärmespeichersystem 100 während des thermischen Entladens.

Die Wärmeübertragungseinrichtung 112 ist als ein Latentwärmeübertrager ausgebildet.

Zum thermischen Entladen wird das Speichermaterial 104 in der Flüssigphase über den Zuführkanal/Abführkanal 114 der Wärmeübertragungseinrichtung 112 zugeführt. Beim thermischen Entladen erfährt das Speichermaterial 104 unter Abgabe latenter Wärme Q einen Phasenwechsel von der Flüssigphase zur Festphase.

Die Wärmeübertragungseinrichtung 112 ist insbesondere als ein aktiver Latentwärmeübertrager ausgebildet. Der aktive Latentwärmeübertrager kann eine nicht näher dargestellte Austragseinrichtung aufweisen, beispielsweise eine Abschabeeinrichtung, um durch den Phasenwechsel erstarrtes Speichermaterial 104 aus der Wärmeübertragungseinrichtung 112 auszutragen.

Bevorzugt ist die Wärmeübertragungseinrichtung 112 als ein rotierender Trommelwärmeübertrager ausgebildet.

Das erstarrte Speichermaterial 104 wird aus der Wärmeübertragungseinrichtung 112 als Stückgut oder als Granulat ausgetragen. Die Form des erstarrten Speichermaterials 104 kann in Abhängigkeit vom Phasenwechselmaterial variieren.

Der Kreislauf 108 umfasst eine Rückführungseinrichtung 116. Die Rückführungseinrichtung 116 ist eingerichtet, das erstarrte Speichermaterial 104 nach dem thermischen Entladen durch die Abgabe latenter Wärme in der Festphase dem Innenraum 106 des Speicherbehälters 102 rückzuführen.

Die Rückführungseinrichtung 116 bildet eine Verbindung zum Rückführen des erstarrten Speichermaterials 104 von der Wärmeübertragungseinrichtung 112 zum Speicherbehälter 102. Die Rückführungseinrichtung 116 mündet in den Innenraum 106 des Speicherbehälters 102.

Die Rückführungseinrichtung 116 umfasst eine Fördereinheit 118 zum Fördern des erstarrten Speichermaterials 104 von der Wärmeübertragungseinrichtung 112 in den Innenraum 104 des Speicherbehälters 102.

Die Fördereinheit 118 ist bevorzugt als ein Stetigförderer ausgebildet. Vorzugsweise kann die Fördereinheit 118 als eine Förderschnecke, wie in Fig. 1 dargestellt, ein Förderband, eine Zellenradschleuse oder dergleichen ausgebildet sein.

Alternativ oder ergänzend kann die Rückführungseinrichtung 116 eine Schleuse zur Zufuhr des erstarrten Speichermaterials 104 in den Innenraum 104 des Speicherbehälters 102 aufweisen.

Alternativ oder ergänzend kann die Rückführungseinrichtung 116 eine Schwerkraftzuführung aufweisen, welche in den Innenraum 106 des Speicherbehälters 102 mündet. Diese Schwerkraftzuführung kann beispielsweise in Form eines Fallrohrs oder eines abgetrennten Rückführungsbereichs im Speicherbehälter 102 ausgebildet sein.

Der Schwerkraftzuführung kann das erstarrte Speichermaterial 104 beispielsweise von oben oder seitlich zugeführt werden, so dass das Speichermaterial 104 unter Schwerkrafteinfluss in den Innenraum 106 des Speicherbehälters 102 geleitet wird. Optional kann beispielsweise ein Schneckenförderer vorgesehen sein, welcher insbesondere vollständig im Innenraum 106 des Speicherbehälters 102 angeordnet ist und der Verteilung von erstarrtem Speichermaterial 104 im unteren Bereich des Speicherbehälters 102 dient.

Im Innenraum 106 des Speicherbehälters 102 ist ein Sammelbereich 120 zum Sammeln von Speichermaterial 104 in der Flüssigphase ausgebildet.

Der Sammelbereich 120 ist in einem untersten Bereich im Innenraum 106 des Speicherbehälters 102 vorgesehen.

Optional kann es vorgesehen sein, dass im Sammelbereich 120 und/oder angrenzend an den Sammelbereich 120 eine elektrische und/oder thermische Heizvorrichtung angeordnet ist. Hierdurch kann insbesondere das Vorhandsein einer Flüssigphase gewährleistet werden.

In einer alternativen oder ergänzenden Ausführungsform kann sich der Sammelbereich 120 bereichsweise entlang eines Umfangsbereichs oder einer Umfangswandung des Speicherbehälters 102 erstrecken.

Durch eine flüssigkeitsdurchlässige und feststoffundurchlässige Trenneinrichtung 122 ist der Sammelbereich 120 zum übrigen Innenraum 106 des Speicherbehälters 102 abgegrenzt. Die Trenneinrichtung 122 ist als ein Lochblech oder ein Sieb ausgebildet.

Durch die Trenneinrichtung 122 kann Speichermaterial 104 in der Flüssigphase in den Sammelbereich 120 einströmen und ein Eintreten des Speichermaterials 104 in der Festphase in den Sammelbereich 120 ist verhindert.

Der Sammelbereich 120 ist mit der Entnahmeeinrichtung 110 fluidgekoppelt. Dadurch kann Speichermaterial 104 in der Flüssigphase durch die Entnahmeeinrichtung 110 aus dem Sammelbereich 120 entnommen werden und der Wärmeübertragungseinrichtung 112 zugeführt werden.

Beim thermischen Beladen des Speichermaterials 104 wird Speichermaterial 104 in der Flüssigphase auf einem Temperaturniveau geringfügig oberhalb der Schmelztemperatur bzw. Phasenwechseltemperatur aus dem Sammelbereich 120 entnommen.

Im oberen Bereich des Speicherbehälters 102 bis zur Phasengrenze zwischen Flüssigphase und Festphase des Speichermaterials 104 stellt sich ein Temperaturgradient von einer maximalen Temperatur des thermisch beladenen Speichermaterials 104 bis zur Schmelztemperatur des Speichermaterials 104 an der Phasengrenze ein.

Im Bett des Speichermaterials 104 in der Festphase, d.h. im unteren Bereich des Speicherbehälters 102, ist eine konstante Temperatur bei der Schmelztemperatur bzw. Phasenwechseltemperatur des Speichermaterials 104 gebildet.

Zur Entnahme von Speichermaterial 104 in der Flüssigphase wird dieses durch die Entnahmeeinrichtung 110 aus dem Sammelbereich 120 entnommen, wobei Speichermaterial 104 in der Flüssigphase im Bereich der Grenze zwischen Flüssigphase und Festphase in Strömungsrichtung S durch das poröse Bett aus Speichermaterial 104 in der Festphase in den Sammelbereich 120 nachströmt.

Durch das Durchströmen des Speichermaterials 104 in der Flüssigphase durch das poröse Bett aus Speichermaterial 104 in der Festphase ist vorgesehen, dass das Speichermaterial 104 in der Flüssigphase Wärme an das Speichermaterial 104 in der Festphase abgibt und dieses zumindest teilweise aufschmilzt.

Der Aufschmelzprozess des Speichermaterials 104 in der Festphase kann dabei hauptsächlich in der Nähe der Phasengrenze zwischen Festphase und Flüssigphase erfolgen.

Durch die Entnahme von Speichermaterial 104 in der Flüssigphase ist auf diese Weise ein stetiger Phasenwechsel von Speichermaterial 104 aus der Festphase in die Flüssigphase ausgebildet.

Das entnommene Speichermaterial 104 in der Flüssigphase wird anschließend der Wärmeübertragungseinrichtung 112 zugeführt und durch Zufuhr von Wärme Q erwärmt.

Die Zufuhr von Wärme Q kann durch einen Wärmeübertrager, beispielsweise durch Abwärme betrieben, oder durch eine Heizeinrichtung, beispielsweise eine elektrische Heizeinrichtung, erfolgen. Ferner kann die Zufuhr von Wärme Q durch eine Hochtemperaturwärmepumpe erfolgen.

Bevorzugt wird das Speichermaterial 104 auf ein Temperaturniveau deutlich oberhalb der Phasenwechseltemperatur erwärmt.

Besonders bevorzugt wird das Speichermaterial 104 auf ein Temperaturniveau geringfügig unterhalb der Zersetzungstemperatur des Speichermaterials 104 erwärmt.

Anschließend wird das erwärmte Speichermaterial 104 in der Flüssigphase über den Zuführkanal/Abführkanal 114 wieder in den Innenraum 106 des Speicherbehälters 102 geleitet.

Fig. 2 zeigt einen thermischen Entladevorgang durch das Wärmespeichersystem 100.

Zum Entladen des erwärmten Speichermaterials 104 wird das Speichermaterial 104 in der Flüssigphase über den Zuführkanal/Abführkanal 114 aus dem oberen Bereich im Innenraum 106 des Speicherbehälters 102 entnommen und der Wärmeübertragungseinrichtung 112 zugeführt.

Beim Entladen des Speichermaterials 104 wird dieses in der Wärmeübertragungseinrichtung 112 unter Abgabe von Wärme Q abgekühlt.

Insbesondere erfolgt das thermische Entladen des Speichermaterials 104 in dem aktiven Latentwärmeübertrager unter Abgabe sensibler und latenter Wärme Q. Das Speichermaterial 104 erstarrt dabei durch den Phasenwechsel von der Flüssigphase zur Festphase.

Nach der Übertragung latenter Wärme liegt das erstarrte Speichermaterial 104 aufgrund des aktiven Latentwärmeübertragers, beispielsweise aufgrund der Austragseinrichtung, einer Schabeeinrichtung oder des rotierenden Trommelwärmeübertrager, stückig oder in Form von losem Granulat vor.

Dieses stückige oder granulatförmige erstarrte Speichermaterial 104 wird darauffolgend der Rückführungseinrichtung 116 zugeführt, die das erstarrte Speichermaterial 104 durch die Fördereinheit 118 in den Innenraum 106 des Speicherbehälters 102 rückführt.

Bevorzugt wird das erstarrte Speichermaterial 104 durch die Rückführungseinrichtung 116 in den unteren Bereich des Innenraums 106 des Speicherbehälters 102 rückgeführt.

Durch die Rückführung des erstarrten Speichermaterials 104 in den Innenraum 106 des Speicherbehälters 102 bildet sich das poröse Bett aus Speichermaterial 104 in der Festphase aus.

In der zuvor beschriebenen Weise wird das rückgeführte erstarrte Speichermaterial 104 durch das Durchströmen mit Speichermaterial 104 in der Flüssigphase wieder aufgeschmolzen.

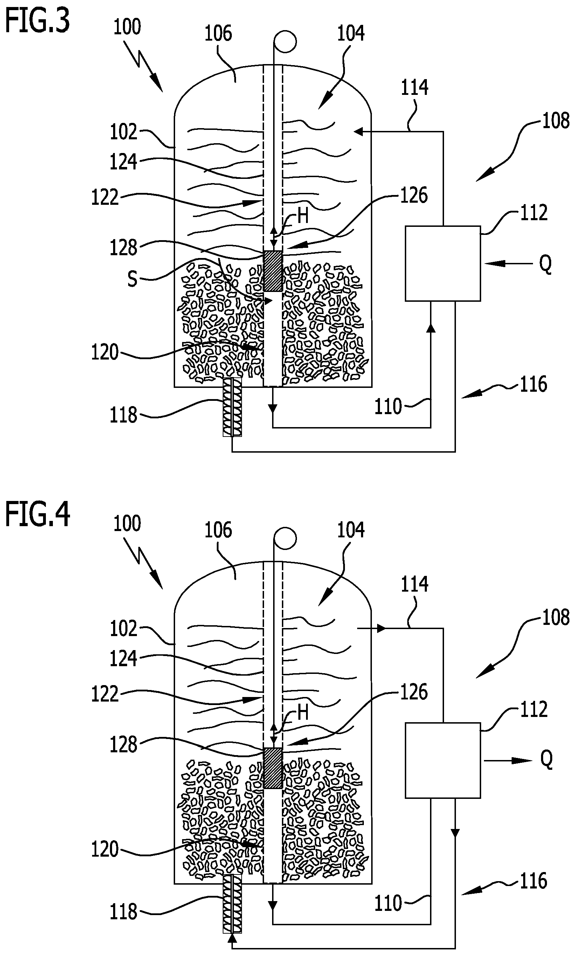

In den Fig. 3 und Fig. 4 ist eine alternative Ausführungsform des Wärmespeichersystems 100 dargestellt, wobei Fig. 3 das Wärmespeichersystem 100 während eines thermischen Beladevorgangs zeigt und Fig. 4 das Wärmespeichersystem 100 während eines thermischen Entladevorgangs.

Diese alternative Ausführungsform des Wärmespeichersystems 100 unterscheidet sich von der zuvor beschriebenen ersten Ausführungsform im Wesentlichen durch die Ausgestaltung des Sammelbereichs 120. Das zugrunde liegende Verfahrenskonzept des thermischen Entladens und Beladens entspricht dem der ersten Ausführungsform des Wärmespeichersystems 100.

Bei dem Wärmespeichersystem 100 gemäß der Fig. 3 und 4 ist der Sammelbereich 120 durch einen Sammelkanal 124 gebildet.

Der Sammelbereich 120 kann durch einen Sammelkanal 124 oder durch mehrere Sammelkanäle 124, die verteilt im Innenraum 106 des Speicherbehälters 102 angeordnet sind, ausgebildet sein.

Der Sammelkanal 124 erstreckt sich im Innenraum 106 des Speicherbehälters 102 in einer im Wesentlichen vertikalen Richtung. Bevorzugt erstreckt sich der Sammelkanal 124 durchgehend von einem Boden des Speicherbehälters 102 zu einem Deckel des Speicherbehälters 102.

Der Sammelkanal 124 kann beispielsweise durch ein rohrförmiges Element ausgebildet sein.

Eine Wandung des Sammelkanals 124 bildet die flüssigkeitsdurchlässige und feststoffundurchlässige Trenneinrichtung 122 zum Abgrenzen des Sammelbereichs 120 zu dem übrigen Innenraum 106 des Speicherbehälters 102.

Die Trenneinrichtung 122 kann beispielsweise durch eine Vielzahl von Durchgängen oder Löchern entlang einer Längserstreckung in der Wandung des Sammelkanals 124 ausgebildet sein. Ebenso kann die Trenneinrichtung 122 durch ein rohrförmiges Sieb ausgebildet sein.

Ein unterster Abschnitt des Sammelkanals 124 ist mit der Entnahmeeinrichtung 110 fluidverbunden, so dass zum thermischen Beladen Speichermaterial 104 in der Flüssigphase der Wärmeübertragungseinrichtung 112 zugeführt werden kann.

Damit beim thermischen Beladen verhindert ist, dass Speichermaterial 104 in der Flüssigphase auf einem hohen Temperaturniveau aus dem obersten Bereich des Innenraums 106 durch den sich im Innenraum 106 erstreckenden Sammelkanal 124 entnommen wird, weist der Sammelkanal 124 eine Niveauregulierungseinrichtung 126 auf.

Die Niveauregulierungseinrichtung 126 blockiert einen durch den Sammelkanal 124 gebildeten Strömungsweg zur Entnahmeeinrichtung 110 in Abhängigkeit von der Schichtungstemperatur des Speichermaterials 104. Dadurch wird ein Nachströmen des Speichermaterials 104 in der Flüssigphase auf einem hohen Temperaturniveau aus dem obersten Bereich des Innenraums 106 durch den Sammelkanal 124 verhindert.

Die Niveauregulierungseinrichtung 126 umfasst ein Höhenverstellelement 128, das entlang einer Höhenverstellrichtung H höhenverstellbar innerhalb des Sammelkanals 124 angeordnet ist und den Strömungsweg blockiert.

Das Höhenverstellelement 128 kann aktiv angetrieben sein, um in Abhängigkeit von der Schichtungstemperatur des Speichermaterials 104 in einer entsprechenden Höhenposition angeordnet zu werden.

Insbesondere ist vorgesehen, dass das Höhenverstellelement 128 konstant im Wesentlichen auf dem Niveau der Grenze zwischen Festphase und Flüssigphase des Speichermaterials 104 angeordnet ist.

Ebenso kann das Höhenverstellelement 128 als ein passives Element ausgebildet sein, das sich in Abhängigkeit von der Schichtungstemperatur des Speichermaterials 104 durch eine Dichteänderung oder dergleichen selbsttätig in der entsprechenden Höhenposition anordnet.

In einer alternativen Ausführungsform der Niveauregulierungseinrichtung 126 kann der Sammelkanal 124 höhenverstellbar ausgebildet sein. Dabei kann ein oberes Ende des Sammelkanals 124 in der Höhenverstellrichtung H in unterschiedlichen Höhenpositionen im Innenraum 106 des Speicherbehälters 102 angeordnet werden, um das Nachströmen des Speichermaterials 104 in der Flüssigphase auf dem hohen Temperaturniveau aus dem obersten Bereich des Innenraums 106 durch den Sammelkanal 124 zu verhindern.

Die Höhenverstellung kann durch ineinander gesteckte Teleskoprohre oder durch zwei sich verdrehende koaxiale Rohre ausgebildet sein.

Durch die Niveauregulierungseinrichtung 126 wird bei der Entnahme von Speichermaterial 104 in der Flüssigphase erreicht, dass flüssiges Speichermaterial 104 im Bereich der Grenze zwischen Festphase und Flüssigphase, d.h. auf einem relativ niedrigeren Temperaturniveau, zunächst einen oberen Bereich des porösen Bettes aus Speichermaterial in der Festphase durchströmt und sich darauffolgend im Sammelkanal 124 sammelt.

Durch das bereichsweise Durchströmen des porösen Betts aus Speichermaterial 104 in der Festphase mit dem Speichermaterial 104 in der Flüssigphase, wird das Speichermaterial 104 in der Festphase zumindest teilweise aufgeschmolzen.

Der in Fig. 4 dargestellte thermische Entladevorgang des Wärmespeichersystems 100 erfolgt in gleicher Weise wie der zuvor gemäß Fig. 2 beschriebene Entladevorgang.

### Bezugszeichenliste

- 100: Wärmespeichersystem
- 102: Speicherbehälter
- 104: Speichermaterial
- 106: Innenraum
- 108: Kreislauf
- 110: Entnahmeeinrichtung
- 112: Wärmeübertragungseinrichtung
- 114: Zuführkanal/Abführkanal
- 116: Rückführungseinrichtung
- 118: Fördereinheit
- 120: Sammelbereich
- 122: Trenneinrichtung
- 124: Sammelkanal
- 126: Niveauregulierungseinrichtung
- 128: Höhenverstellelement
- Q: Wärme

## Patentansprüche

1. Wärmespeichersystem (100), aufweisend einen Speicherbehälter (102) zur Aufnahme von Speichermaterial (104) in einem Innenraum (106) des Speicherbehälters (102) und einen Kreislauf (108) zur Entnahme und Zufuhr des im Innenraum (106) aufgenommenen Speichermaterials (104), wobei der Kreislauf (108) umfasst:
- eine Wärmeübertragungseinrichtung (112) zum thermischen Entladen und/oder thermischen Beladen des Speichermaterials (104),
- eine Entnahmeeinrichtung (110), die eingerichtet ist, Speichermaterial (104) in der Flüssigphase aus dem Speicherbehälter (102) zu entnehmen und zum thermischen Entladen und/oder thermischen Beladen der Wärmeübertragungseinrichtung (112) zuzuführen,
- einen Zuführkanal/Abführkanal (114), der eine Fluidverbindung zwischen der Wärmeübertragungseinrichtung (112) und dem Speicherbehälter (102) bildet, und
**dadurch gekennzeichnet, dass**
der Kreislauf (108) eine Rückführungseinrichtung (116) umfasst, die eingerichtet ist, Speichermaterial (104) in der Festphase dem Innenraum (106) des Speicherbehälters (102) rückzuführen.

2. Wärmespeichersystem nach Anspruch 1, **dadurch gekennzeichnet, dass** die Wärmeübertragungseinrichtung (112) eingerichtet ist, um zum thermischen Entladen des Speichermaterials (104) latente Wärme zu übertragen und um zum thermischen Beladen des Speichermaterials (104) sensible Wärme zu übertragen.

3. Wärmespeichersystem nach Anspruch 1 oder 2, **dadurch gekennzeichnet, dass** die Wärmeübertragungseinrichtung (112) einen Latentwärmeübertrager umfasst oder als ein Latentwärmeübertrager ausgebildet ist und eine Austragseinrichtung aufweist, um erstarrtes Speichermaterial auszutragen und/oder der Rückführungseinrichtung (116) zuzuführen.

4. Wärmespeichersystem nach einem der vorhergehenden Ansprüche, **dadurch gekennzeichnet, dass** die Wärmeübertragungseinrichtung (112) einen rotierenden Trommelwärmeübertrager umfasst oder als ein rotierender Trommelwärmeübertrager ausgebildet ist.

5. Wärmespeichersystem nach einem der vorhergehenden Ansprüche, **dadurch gekennzeichnet, dass** die Rückführungseinrichtung (116) wenigstens eine Fördereinheit (118) und/oder eine Schwerkraftzuführung aufweist und in den Innenraum (106) des Speicherbehälters (102) mündet.

6. Wärmespeichersystem nach Anspruch 5, **dadurch gekennzeichnet, dass** die wenigstens eine Fördereinheit (118) einen Stetigförderer, eine Schleuse und/oder dergleichen aufweist.

7. Wärmespeichersystem nach einem der vorhergehenden Ansprüche, **dadurch gekennzeichnet, dass** im Innenraum (106) des Speicherbehälters (102) eine Verteilungseinrichtung vorgesehen ist, um im Innenraum (106) des Speicherbehälters (102) in einem unteren Bereich eine gleichmäßige Verteilung von Speichermaterial (104) in der Festphase auszubilden.

8. Wärmespeichersystem nach einem der vorhergehenden Ansprüche, **dadurch gekennzeichnet, dass** im Innenraum (106) des Speicherbehälters (102) wenigstens ein Sammelbereich (120) zum Sammeln von Speichermaterial (104) in der Flüssigphase vorgesehen ist, wobei der Sammelbereich (120) durch eine flüssigkeitsdurchlässige und feststoffundurchlässige Trenneinrichtung (122) zum übrigen Innenraum (106) des Speicherbehälters (102) abgegrenzt ist und der Sammelbereich (120) mit der Entnahmeeinrichtung (110) fluidgekoppelt ist.

9. Wärmespeichersystem nach Anspruch 8, **dadurch gekennzeichnet, dass** der wenigstens eine Sammelbereich (120) in einem Bodenbereich des Speicherbehälters (102) angeordnet ist und/oder sich zumindest bereichsweise entlang eines Umfangsbereichs des Speicherbehälters (102) erstreckt.

10. Wärmespeichersystem nach Anspruch 8 oder 9, **dadurch gekennzeichnet, dass** der wenigstens eine Sammelbereich (120) einen Sammelkanal (124) umfasst, der sich im Innenraum (106) des Speicherbehälters (102), bevorzugt in einer im Wesentlichen vertikalen Richtung, erstreckt.

11. Wärmespeichersystem nach Anspruch 10, **dadurch gekennzeichnet, dass** der Sammelkanal (124) eine Niveauregulierungseinrichtung (126) aufweist, die einen durch den Sammelkanal (124) gebildeten Strömungsweg zu der Entnahmeeinrichtung (110) in Abhängigkeit von einer Schichtungstemperatur des Speichermaterials (104) blockiert.

12. Wärmespeichersystem nach einem der Ansprüche 8 bis 11, **dadurch gekennzeichnet, dass** die Trenneinrichtung (122) und/oder der Sammelbereich (120) zumindest bereichsweise beheizt ist.

13. Wärmespeicher nach einem der vorhergehenden Ansprüche, **dadurch gekennzeichnet, dass** ein Wärmeübertrager in einem unteren Bereich im Innenraum (106) des Speicherbehälters (102) vorgesehen ist.

14. Verfahren zum Speichern thermischer Energie durch ein Wärmespeichersystem (100), insbesondere Wärmespeichersystem (100) nach einem der Ansprüche 1 bis 13, aufweisend die Schritte, dass
- zum thermischen Entladen Speichermaterial (104) in der Flüssigphase einem Speicherbehälter (102) entnommen wird und über einen Zuführkanal/Abführkanal (114) einer Wärmeübertragungseinrichtung (112) zugeführt wird,
- das Speichermaterial (104) in der Wärmeübertragungseinrichtung (112) durch Übertragung latenter Wärme thermisch entladen wird,
**dadurch gekennzeichnet, dass**
- erstarrtes Speichermaterial (104) nach dem thermischen Entladen einer Rückführungseinrichtung (116) zugeführt wird, und
- das Speichermaterial (104) in der Festphase durch die Rückführungseinrichtung (116) in den Innenraum (106) des Speicherbehälters (102) rückgeführt wird.

15. Verfahren nach Anspruch 14, **dadurch gekennzeichnet, dass** zum thermischen Beladen des Wärmespeichersystems (100) Speichermaterial (104) in der Flüssigphase aus dem Speicherbehälter (102) entnommen wird und der Wärmeübertragungseinrichtung (112) zugeführt wird, das Speichermaterial (104) durch Wärmezufuhr in der Wärmeübertragungseinrichtung (112) erwärmt wird und das erwärmte Speichermaterial (104) in den Speicherbehälter (102) rückgeführt wird.

## Claims

1. Heat storage system (100) comprising a storage container (102) for receiving storage material (104) in an interior (106) of the storage container (102) and a circuit (108) for removing and supplying the storage material (104) received in the interior (106), wherein the circuit (108) comprises:
- a heat transfer device (112) for thermally discharging and/or thermally charging the storage material (104),
- a removal device (110) which is set up to remove storage material (104) in the liquid phase from the storage container (102) and to feed it to the heat transfer device (112) for thermal discharging and/or thermal charging,
- a supply channel/discharge channel (114) forming a fluid connection between the heat transfer device (112) and the storage container (102), and
**characterized in that**
the circuit (108) comprises a return device (116) which is set up to return storage material (104) in the solid phase to the interior (106) of the storage container (102).

2. Heat storage system according to Claim 1, **characterized in that** the heat transfer device (112) is set up to transfer latent heat for thermally discharging the storage material (104) and to transfer sensible heat for thermally charging the storage material (104).

3. Heat storage system according to Claim 1 or 2, **characterized in that** the heat transfer device (112) comprises a latent heat exchanger or is designed as a latent heat exchanger and has a discharge device for discharging solidified storage material and/or feeding it to the return device (116).

4. Heat storage system according to one of the preceding claims, **characterized in that** the heat transfer device (112) comprises a rotating drum heat exchanger or is designed as a rotating drum heat exchanger.

5. Heat storage system according to one of the preceding claims, **characterized in that** the return device (116) has at least one conveying unit (118) and/or a gravity feed and leads into the interior (106) of the storage container (102).

6. Heat storage system according to Claim 5, **characterized in that** the at least one conveying unit (118) has a continuous conveyor, a sluice and/or the like.

7. Heat storage system according to one of the preceding claims, **characterized in that** a distribution device is provided in the interior (106) of the storage container (102) in order to form a uniform distribution of storage material (104) in the solid phase in a lower region in the interior (106) of the storage container (102).

8. Heat storage system according to one of the preceding claims, **characterized in that** at least one collection region (120) for collecting storage material (104) in the liquid phase is provided in the interior (106) of the storage container (102), wherein the collection region (120) is delimited from the rest of the interior (106) of the storage container (102) by a liquid-permeable and solid-impermeable separating device (122) and the collection region (120) is fluid-coupled to the removal device (110).

9. Heat storage system according to Claim 8, **characterized in that** the at least one collection region (120) is arranged in a base region of the storage container (102) and/or extends at least in some regions along a peripheral region of the storage container (102).

10. Heat storage system according to Claim 8 or 9, **characterized in that** the at least one collection region (120) comprises a collection channel (124) which extends in the interior (106) of the storage container (102), preferably in a substantially vertical direction.

11. Heat storage system according to Claim 10, **characterized in that** the collection channel (124) has a level regulating device (126) which blocks a flow path formed by the collection channel (124) to the removal device (110) depending on a stratification temperature of the storage material (104).

12. Heat storage system according to one of Claims 8 to 11, **characterized in that** the separating device (122) and/or the collection region (120) is heated at least in some regions.

13. Heat store according to one of the preceding claims, **characterized in that** a heat exchanger is provided in a lower region in the interior (106) of the storage container (102).

14. Method for storing thermal energy by means of a heat storage system (100), in particular a heat storage system (100) according to one of Claims 1 to 13, comprising the steps that
- for thermal discharging, storage material (104) is removed from a storage container (102) in the liquid phase and fed to a heat transfer device (112) via a supply channel/discharge channel (114),
- the storage material (104) is thermally discharged in the heat transfer device (112) by transferring latent heat,
**characterized in that**
- solidified storage material (104) is fed to a return device (116) after thermal discharge, and
- the storage material (104) in the solid phase is returned through the return device (116) into the interior (106) of the storage container (102).

15. Method according to Claim 14, **characterized in that**, for thermally charging the heat storage system (100), storage material (104) is removed from the storage container (102) in the liquid phase and fed to the heat transfer device (112), the storage material (104) is heated by supplying heat in the heat transfer device (112) and the heated storage material (104) is returned into the storage container (102).

## Revendications

1. Système de stockage de chaleur (100), comprenant un contenant de stockage (102) pour contenir un matériau de stockage (104) dans un espace intérieur (106) du contenant de stockage (102) et un circuit (108) pour retirer et alimenter le matériau de stockage (104) contenu à l'intérieur de l'espace intérieur (106), le circuit (108) comprenant :
- un dispositif de transfert de chaleur (112) pour décharger thermiquement et/ou charger thermiquement le matériau de stockage (104),
- un dispositif de retrait (110), qui est conçu pour retirer le matériau de stockage (104) en phase liquide du contenant de stockage (102) et pour amener ledit matériau de stockage au dispositif de transfert de chaleur (112) pour le déchargement thermique et/ou le chargement thermique,
- un canal d'alimentation/canal d'évacuation (114) qui forme une liaison fluidique entre le dispositif de transfert de chaleur (112) et le contenant de stockage (102), et
**caractérisé en ce que**
le circuit (108) comprend un dispositif de retour (116), qui est conçu pour ramener le matériau de stockage (104) en phase solide à l'intérieur de l'espace intérieur (106) du contenant de stockage (102).

2. Système de stockage de chaleur selon la revendication 1, **caractérisé en ce que** le dispositif de transfert de chaleur (112) est conçu pour transférer de la chaleur latente pour le déchargement thermique du matériau de stockage (104) et pour transférer de la chaleur sensible pour le chargement thermique du matériau de stockage (104).

3. Système de stockage de chaleur selon la revendication 1 ou 2, **caractérisé en ce que** le dispositif de transfert de chaleur (112) comprend un échangeur de chaleur latente ou est réalisé sous la forme d'un échangeur de chaleur latente et comprend un dispositif d'évacuation pour évacuer le matériau de stockage solidifié et/ou pour l'amener au dispositif de retour (116).

4. Système de stockage de chaleur selon l'une quelconque des revendications précédentes, **caractérisé en ce que** le dispositif de transfert de chaleur (112) comprend un échangeur de chaleur à tambour rotatif ou est réalisé sous la forme d'un échangeur de chaleur à tambour rotatif.

5. Système de stockage de chaleur selon l'une quelconque des revendications précédentes, **caractérisé en ce que** le dispositif de retour (116) comprend au moins une unité de transport (118) et/ou une alimentation par gravité et débouche dans l'espace intérieur (106) du contenant de stockage (102).

6. Système de stockage de chaleur selon la revendication 5, **caractérisé en ce que** l'au moins une unité de transport (118) comprend un transporteur continu, un sas et/ou analogue.

7. Système de stockage de chaleur selon l'une quelconque des revendications précédentes, **caractérisé en ce qu'**un dispositif de répartition est prévu dans l'espace intérieur (106) du contenant de stockage (102) afin de réaliser une répartition uniforme de matériau de stockage (104) en phase solide dans une zone inférieure de l'espace intérieur (106) du contenant de stockage (102).

8. Système de stockage de chaleur selon l'une quelconque des revendications précédentes, **caractérisé en ce qu'**au moins une zone de collecte (120) destinée à collecter le matériau de stockage (104) en phase liquide est prévue dans l'espace intérieur (106) du contenant de stockage (102), la zone de collecte (120) étant délimitée du reste de l'espace intérieur (106) du contenant de stockage (102) par un dispositif de séparation (122) perméable aux liquides et imperméable aux solides, et la zone de collecte (120) étant couplée fluidiquement au dispositif de retrait (110).

9. Système de stockage de chaleur selon la revendication 8, **caractérisé en ce qu'**une zone de collecte (120) est disposée dans une zone de fond du contenant de stockage (102) et/ou s'étend au moins par zones le long d'une zone périphérique du contenant de stockage (102).

10. Système de stockage de chaleur selon la revendication 8 ou 9, **caractérisé en ce qu'**une zone de collecte (120) comprend un canal de collecte (124) qui s'étend dans l'espace intérieur (106) du contenant de stockage (102), de préférence dans une direction sensiblement verticale.

11. Système de stockage de chaleur selon la revendication 10, **caractérisé en ce qu'**un canal de collecte (124) comprend un dispositif de régulation de niveau (126) qui bloque un trajet d'écoulement formé par le canal de collecte (124) vers le dispositif de retrait (110) en fonction d'une température de stratification du matériau de stockage (104).

12. Système de stockage de chaleur selon l'une quelconque des revendications 8 à 11, **caractérisé en ce que** le dispositif de séparation (122) et/ou la zone de collecte (120) sont chauffés au moins par zones.

13. Système de stockage de chaleur selon l'une quelconque des revendications précédentes, **caractérisé en ce qu'**un échangeur de chaleur est prévu dans une zone inférieure de l'espace intérieur (106) du contenant de stockage (102).

14. Procédé de stockage d'énergie thermique par un système de stockage de chaleur (100), en particulier un système de stockage de chaleur (100) selon l'une quelconque des revendications 1 à 13, comprenant les étapes suivantes
- pour le déchargement thermique, du matériau de stockage (104) en phase liquide est retiré d'un contenant de stockage (102) et amené à un dispositif de transfert de chaleur (112) par l'intermédiaire d'un canal d'alimentation/canal d'évacuation (114),
- le matériau de stockage (104) est déchargé thermiquement dans le dispositif de transfert de chaleur (112) par transfert de chaleur latente,
**caractérisé en ce que**
- du matériau de stockage (104) solidifié après le déchargement thermique est amené à un dispositif de retour (116), et
- le matériau de stockage (104) en phase solide est ramené dans l'espace intérieur (106) du contenant de stockage (102) par le dispositif de retour (116).

15. Procédé selon la revendication 14, **caractérisé en ce que**, pour le chargement thermique du système de stockage de chaleur (100), du matériau de stockage (104) en phase liquide est retiré du contenant de stockage (102) et amené au dispositif de transfert de chaleur (112), le matériau de stockage (104) est chauffé par apport de chaleur dans le dispositif de transfert de chaleur (112), et le matériau de stockage (104) chauffé est ramené dans le contenant de stockage (102).
